# EUROPEAN PATENT APPLICATION

(11) **EP 4 439 208 A1**
(43) Date of publication of application: **02.10.2024**
(21) Application number: 24165356.7
(22) Date of filing: 21.03.2024
(51) Int. Cl.: G05B 19/418, G05D 1/00

(54) **SYSTEM AND SERVER**

(30) Priority: 27.03.2023 JP 2023049333
(71) Applicant: TOYOTA JIDOSHA KABUSHIKI KAISHA, Toyota-shi, Aichi-ken, 471-8571 (JP)
(72) Inventor: YASUYAMA, Shogo, Toyota-shi, Aichi-ken, 471-8571 (JP); YOKOYAMA, Daiki, Toyota-shi, Aichi-ken, 471-8571 (JP)
(74) Representative: Cabinet Beau de Loménie

(57) **Abstract**

A system includes a remote control unit (312), a disabling execution unit (182) and a disabling instruction unit (316). The remote control unit (312) causes a moving object to move by remote control, the moving object being able to move by the remote control in a manufacturing process in a factory (FC) that manufactures the moving object, and in a conveyance process outside the factory, the conveyance process shipping the moving object after manufacturing from the factory (FC) and conveying the moving object to a destination. The moving object includes a communication unit (190) and a driving control unit (184). The communication unit (190) has a communication function and the driving control unit (184) executes driving control of the moving object. The disabling execution unit (182) executes disabling processing for disabling the remote control. The disabling instruction unit (316) determines whether or not to execute the disabling processing using transit point information related to the remote control at at least one transit point at which the moving object transits in the conveyance process, and instructs the disabling execution unit to execute the disabling processing when determining that the disabling processing is to be executed.

## Description

### CROSS REFERENCE TO RELATED APPLICATIONS

This application is based upon and claims benefit of priority from Japanese Patent Application No. 2023-049333, filed on March 27, 2023, the entire contents of which are incorporated herein by reference.

### BACKGROUND

### FIELD

The present disclosure relates to a system and a server.

### RELATED ART

For example, Japanese Unexamined Patent Application Publication (Translation of PCT Application) No. 2017-538619 discloses a vehicle running method for causing a vehicle to run by remote control from an end of an assembly line of a manufacturing system to a parking area of the manufacturing system in the manufacturing system for manufacturing vehicles.

It is studied to disable a remote control function at a point of time of shipping of vehicles from factories that manufacture the vehicles. However, there is, for example, a demand of remote control after shipping such as parking of vehicles or loading of the vehicles to ships at transit points after shipping. Hence, a technique that can execute remote control after shipping and appropriately disable the remote control is required.

### SUMMARY

The present disclosure can be implemented as a following aspect.
(1) One aspect of the present disclosure provides a system. This system includes: a remote control unit that causes a moving object to move by remote control, the moving object being able to move by the remote control in a manufacturing process in a factory that manufactures the moving object, and in a conveyance process outside the factory, the conveyance process shipping the moving object after manufacturing from the factory and conveying the moving object to a destination, the moving object including a communication unit and a driving control unit, the communication unit having a communication function, the driving control unit executing driving control of the moving object; a disabling execution unit that executes disabling processing for disabling the remote control; and a disabling instruction unit determining whether or not to execute the disabling processing using transit point information related to the remote control at at least one transit point at which the moving object transits in the conveyance process, the disabling instruction unit instructing the disabling execution unit to execute the disabling processing when determining that the disabling processing is to be executed.
   The system according to this aspect can disable remote control to meet a demand of remote control in the conveyance process after shipping. Consequently, it is possible to execute remote control after shipping, and appropriately disable the remote control.
(2) In the system according to the above aspect, the transit point information may include information related to whether or not the remote control is able to be executed at the transit point. The disabling instruction unit may instruct the disabling execution unit to execute the disabling processing in a case in which the remote control is unable to be executed at the transit point.
   The system according to this aspect can determine a timing matching feasibility of the remote control at the transit point after shipping as a timing to disable remote control.
(3) In the system according to the above aspect, the disabling instruction unit may instruct the disabling execution unit to execute the disabling processing such that the disabling processing is executed at a timing at which the remote control has been completed at all transit points at which the remote control is able to be executed.
   The system according to this aspect can execute the disabling processing at an appropriate timing matching a demand of remote control in the conveyance process after shipping.
(4) In the system according to the above aspect, the transit point information may include information related to whether or not the remote control is executed at the transit point. The disabling instruction unit may instruct the disabling execution unit to execute the disabling processing in a case in which the remote control is not executed at the transit point.
   The system according to this aspect can determine a timing matching whether or not remote control is executed at the transit point after shipping as the timing to disable remote control.
(5) In the system according to the above aspect, the disabling instruction unit may instruct the disabling execution unit to execute the disabling processing such that the disabling processing is executed at a timing at which the remote control has been completed at all transit points at which the remote control is executed.
   The system according to this aspect can execute the disabling processing at an appropriate timing matching a demand of remote control in the conveyance process after shipping.
(6) In the system according to the above aspect, the transit point information may include information related to whether or not the transit point includes a transit point disabling instruction unit that instructs the disabling execution unit to execute the disabling processing at the transit point. The disabling instruction unit may instruct the disabling execution unit to execute the disabling processing in a case in which the transit point does not include the transit point disabling instruction unit.
   The system according to this aspect can determine a timing matching whether or not the transit point after shipping includes the transit point disabling instruction unit as a timing to disable remote control.
(7) In the system according to the above aspect, the disabling instruction unit may determine a disabling timing at which the remote control is disabled using the transit point information, and instruct the disabling execution unit to execute the disabling processing at the determined disabling timing.
   The system according to this aspect can execute the disabling processing at an appropriate timing matching a demand of remote control in the conveyance process after shipping.
(8) In the system according to the above aspect, the disabling execution unit may be included in the moving object. The disabling instruction unit may determine a disabling timing at which the remote control is disabled using the transit point information, and instruct the disabling execution unit included in the moving object to execute the disabling processing at the determined disabling timing.
   The system according to this aspect can execute the disable processing without communicating with an external device such as a transit point control device at the disabling timing.
(9) The system according to the above aspect may further include a transit point information management unit that updates the transit point information.
   The system according to this aspect can determine a disabling timing on the basis of the latest situation at the transit point by updating information related to remote control at the transit point.
(10) Another aspect of the present disclosure provides a server. This server includes: a remote control unit that causes a moving object to move by remote control, the moving object being able to move by the remote control in a manufacturing process in a factory that manufactures the moving object, and in a conveyance outside the factory, the conveyance process shipping the moving object after manufacturing from the factory and conveying the moving object to a destination, the moving object including a communication unit, a driving control unit, and a disabling execution unit, the communication unit having a communication function, the driving control executing driving control of the moving object, the disabling execution unit executing disabling processing for disabling the remote control; and a disabling instruction unit determining whether or not to execute the disabling processing using transit point information related to the remote control at at least one transit point at which the moving object transits in the conveyance process, the disabling instruction unit instructing the disabling execution unit to execute the disabling processing when determining that the disabling processing is to be executed.

The server according to this aspect can disable remote control to meet a demand of the remote control in the conveyance process after shipping. Consequently, it is possible to execute moving of the moving object by remote control after shipping, and appropriate disable the remote control.

The present disclosure can be also implemented by various aspects other than the system and the server. For example, the present disclosure can be implemented by, for example, aspects such as a moving object, a moving object manufacturing method, a moving object control method, a computer program for implementing this moving object control method, and a non-transitory recording medium having this computer program recorded thereon.

### BRIEF DESCRIPTION OF THE DRAWINGS

FIG. 1 is an explanatory view illustrating a schematic configuration of a system according to a first embodiment;
FIG. 2 is a block diagram illustrating an internal functional configuration of a server;
FIG. 3 is an explanatory view illustrating an example of product information;
FIG. 4 is an explanatory view illustrating an example of transit point information;
FIG. 5A is a flowchart illustrating a processing procedure of running control of a vehicle according to the first embodiment;
FIG. 5B is an explanatory view illustrating automatic driving control of the vehicle by remote control of a remote control unit;
FIG. 6 is an explanatory view schematically illustrating an outline of a manufacturing process and a conveyance process of the vehicle;
FIG. 7 is a block diagram illustrating an internal functional configuration of a transit point control device;
FIG. 8 is an explanatory view schematically illustrating an instructed route of disabling processing;
FIG. 9 is a flowchart illustrating a processing routine of the disabling processing in a factory;
FIG. 10 is a flowchart illustrating the processing routine of the disabling processing at a transit point;
FIG. 11 is an explanatory view schematically illustrating a configuration of the system according to a second embodiment;
FIG. 12 is a flowchart illustrating the processing routine of the disabling processing in the factory executed by the system according to a third embodiment; and
FIG. 13 is a flowchart illustrating the processing routine of the disabling processing in the factory executed by the system according to a fourth embodiment.

### DETAILED DESCRIPTION

### A. First Embodiment

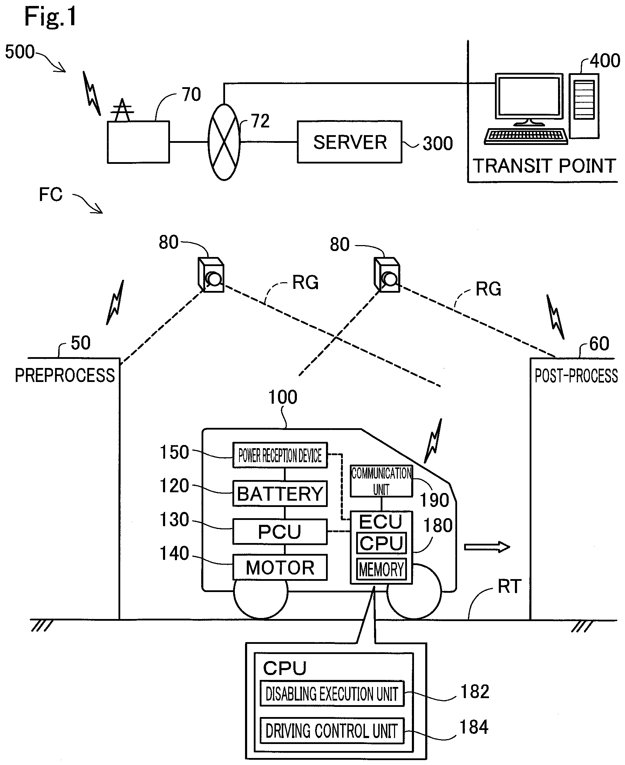

FIG. 1 is an explanatory view illustrating a schematic configuration of a system 500 according to the first embodiment. The system 500 controls automatic driving of a vehicle 100 that is a moving object by remote control. More specifically, the system 500 causes the vehicle 100 to automatically run by, for example, remote control in a manufacturing process in a factory FC that manufactures the vehicle 100. Furthermore, the system 500 can also cause the vehicle 100 outside the factory FC to automatically run via a transit point control device 400 provided at a transit point outside the factory FC in a conveyance process in which the vehicle 100 manufactured in the manufacturing process is shipped from the factory FC and is conveyed to a destination such as a dealer of the vehicle 100. In this description, a state of a finished product, and a state of a semifinished product/product in process that is being manufactured will be collectively referred to as a "vehicle".

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. If the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present embodiment, unmanned driving is realized by the remote control of the vehicle 100. In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

As illustrated in FIG. 1, the factory FC includes a preprocess 50, a post-process 60, and a track RT of the vehicle 100. The track RT is a conveyance zone of the vehicle 100 in the factory FC that connects the preprocess 50 and the post-process 60. The factory FC is not limited to a case in which the factory FC is one building, a case in which the factory FC exists at one site or one address, and the like, and for example, each process of the manufacturing process may exist across a plurality of buildings, a plurality of sites, a plurality of addresses, and the like. The phrase "in the factory FC" may also include a range all the way to a standby place at which the finished vehicle 100 is loaded for shipping after the vehicle 100 is finished. Furthermore, the sentence "the vehicle 100 runs in the factory FC" includes a case in which the vehicle 100 runs in a conveyance zone such as the track RT between processes that exist at a plurality of places, includes a case in which the vehicle 100 runs in each process, and further includes, for example, a case in which the vehicle 100 runs on not only a private road but also a public road between factories to move between the factories that exist at plurality of places. Note that the following description will be described using an example in which the location of the factory FC is in Japan.

The preprocess 50 is, for example, an assembly process of assembling parts to a vehicle body. The post-process 60 is, for example, an inspection process of the vehicle 100. The vehicle 100 fed from the preprocess 50 is a product in process in the post-process 60, and runs on the track RT to the post-process 60 that is a running destination. When a permission to load the vehicle 100 to the post-process 60 is obtained, the vehicle 100 is loaded to the post-process 60. The vehicle 100 is finished as a product when the inspection process that is the post-process 60 is finished, the vehicle 100 runs to the standby place in the factory FC to stand by for shipping as described later. Subsequently, the vehicle 100 is shipped to a corresponding destination country per vehicle 100. The "destination country" means a shipping destination of the vehicle 100 manufactured in the factory FC.

Each process in the factory FC including the preprocess 50 and the post-process 60 includes a process management device for managing manufacturing information of the vehicle 100. The "manufacturing information" includes, for example, a progress status of processing in a process, the number of products in process, the number of products during processing, a manufacturing time per process, a start time and a completion time of processing in each process, vehicle identification information of the vehicle 100 that exists in each process, the number of vehicles scheduled to be manufactured in one day, a target manufacturing time of a process for manufacturing the one vehicle 100, and the like. The target manufacturing time is also referred to as a "takt time". The "vehicle identification information" means various pieces of information that make it possible to individually identify the vehicle 100. The vehicle identification information includes, for example, ID information given to each vehicle 100, specification information of the vehicle 100 such as a vehicle type, a color, and a shape, production management information of the vehicle 100 such as a process name of a product in process, and the like. The vehicle identification information can be acquired from, for example, a Radio Frequency-Identification (RF-ID) tag or the like attached to the vehicle 100. In a case in which a plurality of the vehicles 100 are manufactured in a group unit such as one lot, a lot number or the like can be also used as the vehicle identification information. Furthermore, the vehicle identification information may be coordinates on the track RT, coordinates in the factory FC, position information of the vehicle 100 in the factory FC, or the like. The process management device of each process acquires a manufacturing status of the vehicle 100 in each process from an unillustrated camera or sensor provided in each process, and transmits the acquired manufacturing status to a server 300. The manufacturing status of each process may be transmitted to a production management device that integrally manages the manufacturing status of each process of the factory FC. Note that the preprocess 50 and the post-process 60 are not limited to the assembly process and the inspection process, and, as long as the vehicle 100 processed in the preprocess 50 and the post-process 60 can be run by remote control, various processes can be adopted.

The vehicle 100 includes a communication unit 190, a power reception device 150, a battery 120, a PCU 130, a motor 140, and an Electronic Control Unit (ECU) 180. The communication unit 190 is, for example, a wireless communication device that is mounted on the vehicle 100 such as a dongle. The communication unit 190 has a communication function of performing Controller Area Network (CAN) communication that can be used for control of the vehicle 100 and the like, and diagnosis communication that can be used for failure diagnosis and the like. CAN communication is communication standards that make it possible to perform transmission or reception in multiple directions. Diagnosis communication is communication standards that can associate a request and a response on a one-to-one basis. The communication unit 190 performs wireless communication with devices outside the vehicle 100 such as the server 300 connected to a network 72, the unillustrated production management device that integrally manages production information of the vehicle 100, and the transit point control device 400 via, for example, an access point 70 in the factory FC. The communication unit 190 receives a control signal of remote control of the vehicle 100 and a control signal for disabling remote control from the server 300 and the transit point control device 400.

The power reception device 150 converts alternating current power supplied from an external power feeding device and the like into direct current power by a rectifier to supply to the battery 120 that is a load. The battery 120 is, for example, a chargeable secondary battery such as a lithium ion battery and a nickel-metal hydride battery. The battery 120 is, for example, a high voltage battery of several hundreds of V, and stores electric power used for the vehicle 100 to run. When the electric power supplied from the external power feeding device to the power reception device 150 and regenerative power generated by the motor 140 are supplied to the battery 120, the battery 120 is charged.

The motor 140 is, for example, an alternating current synchronous motor, and functions as an electric motor and an electric generator. When the motor 140 functions as the electric motor, the motor 140 is driven using electric power stored in the battery 120 as a power source. An output of the motor 140 is transmitted to wheels via a decelerator and an axle. At a time of deceleration of the vehicle 100, the motor 140 functions as the electric generator that uses rotation of the wheels, and generates regenerative power. The Power Control Unit (PCU) 130 is electrically connected between the motor 140 and the battery 120.

The PCU 130 includes an inverter, a boost converter, and a DC/DC converter. The inverter converts direct current power supplied from the battery 120 into alternating current power, and supplies the converted alternating current power to the motor 140. The inverter converts the regenerative power supplied from the motor 140 into direct current power to supply to the battery 120. The boost converter boosts the voltage of the battery 120 when the electric power stored in the battery 120 is supplied to the motor 140. The DC/DC converter steps down the voltage of the battery 120 when the electric power stored in the battery 120 is supplied to an accessory or the like.

The ECU 180 is mounted on the vehicle 100, and executes various control of the vehicle 100. The ECU 180 includes an HDD, a memory such as an optical recording medium or a semiconductor memory, a CPU that is a central processing unit, and the like. When the CPU executes various computer programs stored in the memory, various functions such as a disabling execution unit 182 and a driving control unit 184 are implemented. The driving control unit 184 executes driving control of the vehicle 100. "Driving control" refers to, for example, adjustment of an acceleration, a speed, and a steering angle. According to driving control by remote control, the driving control unit 184 controls each actuator mounted on the vehicle 100 according to a control signal of the remote control received from the server 300 via the communication unit 190. Furthermore, the ECU 180 controls transmission and reception of electric power between the battery 120 and the motor 140 by controlling the PCU 130.

The disabling execution unit 182 performs disable processing of disabling remote control of the vehicle 100. More specifically, the disabling execution unit 182 receives a disabling instruction for requesting the vehicle 100 to disable driving control according to remote control from a disabling instruction unit 316 of the server 300 or a transit point disabling instruction unit 416 of the transit point control device 400 by diagnosis communication via the communication unit 190. The phrase "disabling of driving control according to remote control" means that a function of executing driving control according to remote control among the functions of the driving control unit 184 is lost. The disabling execution unit 182 that has received the disabling instruction transitions to a state in which a control request for remote control is disabled. By disabling driving control according to remote control, it is possible to prevent unauthorized remote control of the vehicle 100 by a third party. Disabling of remote control includes reversible disabling in which remote control that has been disabled can be restored to an enabled state in a case in which a predetermined condition is satisfied, and irreversible disabling in which remote control that has been disabled cannot be restored to the enabled state. Reversible disabling can be performed by, for example, encrypting a program of performing a function of executing driving control according to remote control among the functions of the driving control unit 184, and placing the program in a state in which the program can be decrypted only by a person who has a predetermined authority. Irreversible disabling can be performed by, for example, a method for deleting the program, or physically cutting connection with hardware having the function, or the like. The present embodiment will be described using an example in which irreversible disabling is executed unless specified otherwise. From the viewpoint of security enhancement, the ECU 180 preferably further includes a secure microcomputer on which a Field Programmable Gate Array (FPGA), a flash memory, and the like are mounted, a Hardware Security Module (HSM), and the like.

The system 500 includes vehicle detectors and the server 300. The vehicle detectors detect a position and an orientation of the vehicle 100. In the present embodiment, the vehicle detectors are cameras 80. The cameras 80 are fixed to positions at which the cameras 80 can image the track RT and the running vehicle 100. The cameras 80 acquire images that make it possible to check relative positions of the vehicle 100 with respect to the track RT. Captured images of the cameras 80 are used for remote control of the vehicle 100. By using the captured images of the cameras 80, it is possible to execute automatic running of the vehicle 100 by remote control without using detectors such as a camera, a millimeter wave radar, a LiDAR, and the like mounted on the vehicle 100. In this regard, for collision prevention during remote control by the system 500 or the like, the detectors mounted on the vehicle 100 may be secondarily used. Note that, as long as the vehicle detectors are installed in the factory FC and can acquire the position and the orientation of the vehicle 100, various detectors such as an infrared sensor, a laser sensor, an ultrasonic sensor, a millimeter radar, and a LiDAR that can detect the vehicle 100 and are other than the cameras 80 can be used.

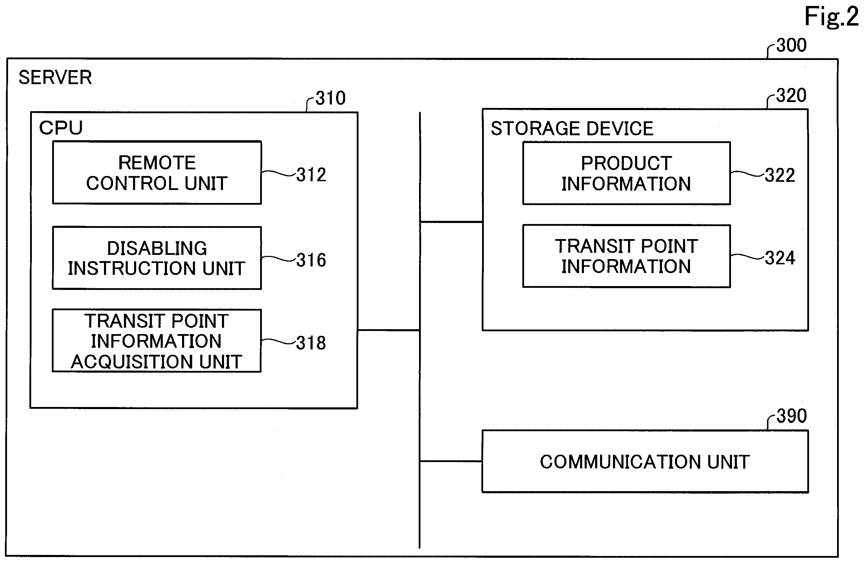

FIG. 2 is a block diagram illustrating an internal functional configuration of the server 300. The server 300 includes a CPU 310 that is a central processing unit, a storage device 320, and a communication unit 390, and these CPU 310, storage device 320, and communication unit 390 are connected with each other via an internal bus, an interface circuit, or the like. The communication unit 390 is a circuit that communicates with the vehicle 100, the transit point control device 400, and the like via the network 72.

The storage device 320 is, for example, a RAM, a ROM, a Hard Disk Drive (HDD), a Solid State Drive (SSD), and the like. In a readable/writable region of the storage device 320, for example, product information 322 acquired in each process or from the production management device, and transit point information 324 acquired from the transit point control device 400 are stored.

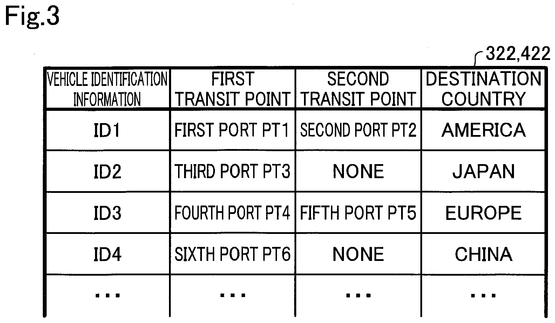

FIG. 3 is an explanatory view illustrating an example of the product information 322. The product information 322 indicates a correspondence between vehicle identification information ID1 to ID4, a destination country, and a first transit point and a second transit point to transit until arrival at a destination of the destination country in the conveyance process. In the example in FIG. 3, the vehicle 100 having the vehicle identification information ID1 is shipped to a dealer in America via a first port PT1 and a second port PT2 that are transit points. The vehicle 100 having the vehicle identification information ID2 is shipped to a dealer in Japan only via a third port PT3. Note that not only two transit points of the first transit point and the second transit point may be set as the transit points, but also one transit point or three or more transit points may be set as the transit points. The product information 322 is shared to the transit point control device 400, and is stored as product information 422 in the transit point control device 400.

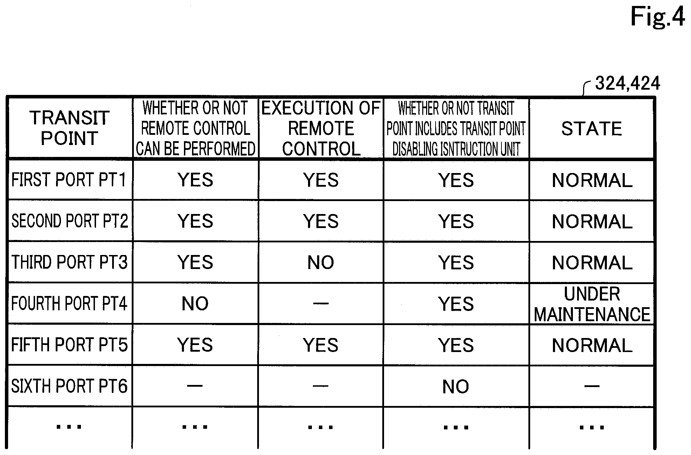

FIG. 4 is an explanatory view illustrating an example of the transit point information 324. The transit point information 324 indicates information related to remote control per transit point. "Whether or not remote control can be performed" indicates, for example, whether or not an infrastructure for remote control is constructed, and indicates whether or not the vehicle 100 can be automatically run at each transit point by remote control. The infrastructure for remote control is, for example, facilities such as functions of communicating with the vehicle 100 and the vehicle detector that are used for remote control of the vehicle 100, and tracks on which the vehicle 100 can run. Note that the transit point information 324 is acquired when the product information 422 acquired by the transit point control device 400 is shared, and is sequentially updated to the latest state by the transit point control device 400.

"Execution of remote control" indicates whether or not the transit point executes remote control. "Whether or not the transit point includes the transit point disabling instruction unit" indicates whether or not the transit point control device 400 at each transit point includes the transit point disabling instruction unit 416. Note that the transit point information 324 may not include all items "whether or not remote control can be performed", "execution of remote control", and "whether or not the transit point includes the transit point disabling instruction unit", only needs to include at least one item of these items, and may include an any combination of these items.

In the example in FIG. 4, remote control indicates "Yes", execution of remote control indicates "Yes", and whether or not the transit point includes the transit point disabling instruction unit indicates "Yes" at the first port PT1, the second port PT2, and a fifth port PT5. Hence, the vehicle 100 can be moved by remote control at the first port PT1, the second port PT2, and the fifth port PT5. The third port PT3 is in a state in which remote control indicates "Yes", yet execution of remote control indicates "No". The fourth port PT4 is in a state in which remote control indicates "No" since the fourth port PT4 is under maintenance. A sixth port PT6 is in a state in which whether or not the transit point includes the transit point disabling instruction unit indicates "No". Hence, the vehicle 100 is not moved by remote control at the third port PT3, the fourth port PT4, and the sixth port PT6.

Back to FIG. 2, various programs for implementing functions provided in the present embodiment are stored in the storage device 320. When a computer program stored in the storage device 320 is executed by the CPU 310, the CPU 310 functions as a remote control unit 312, the disabling instruction unit 316, a transit point information acquisition unit 318, and the like. Part or all of these functions may be configured by hardware circuits. The transit point information acquisition unit 318 acquires the transit point information 324 from the transit point control device 400.

The disabling instruction unit 316 instructs the disabling execution unit 182 of the vehicle 100 in the factory FC to execute disabling processing. When the vehicle 100 is at an outside of the factory FC such as a transit point, the disabling instruction unit 316 instructs the transit point disabling instruction unit 416 included in the transit point control device 400 to instruct the vehicle 100 to execute disabling processing. In the present embodiment, the disabling instruction unit 316 further determines a disabling timing to disable remote control of the vehicle 100 using information related to remote control in the conveyance process. The disabling instruction unit 316 instructs the disabling execution unit 182 or the transit point disabling instruction unit 416 to execute disabling processing at the determined disabling timing.

The disabling instruction unit 316 refers to the product information 322 and the transit point information 324 of the vehicle 100 illustrated in FIGS. 3 and 4 as "the information related to remote control in the conveyance process". By referring to the product information 322, it is possible to acquire the destination country and the transit point per vehicle 100. Furthermore, by referring to the transit point information 324, it is possible to determine the disabling timing to execute the disabling processing per vehicle 100.

The remote control unit 312 executes automatic running of the vehicle 100 in the factory FC by remote control. More specifically, the remote control unit 312 transmits a control signal for requesting remote control of the vehicle 100 to the vehicle 100 via the communication unit 390. When the vehicle 100 accepts the request for remote control, the ECU 180 implements driving control according to the control signal, and, as a result, the vehicle 100 automatically runs. By conveying the vehicle 100 using automatic running by remote control, it is possible to suppress or prevent artificial accidents caused when the vehicle 100 runs.

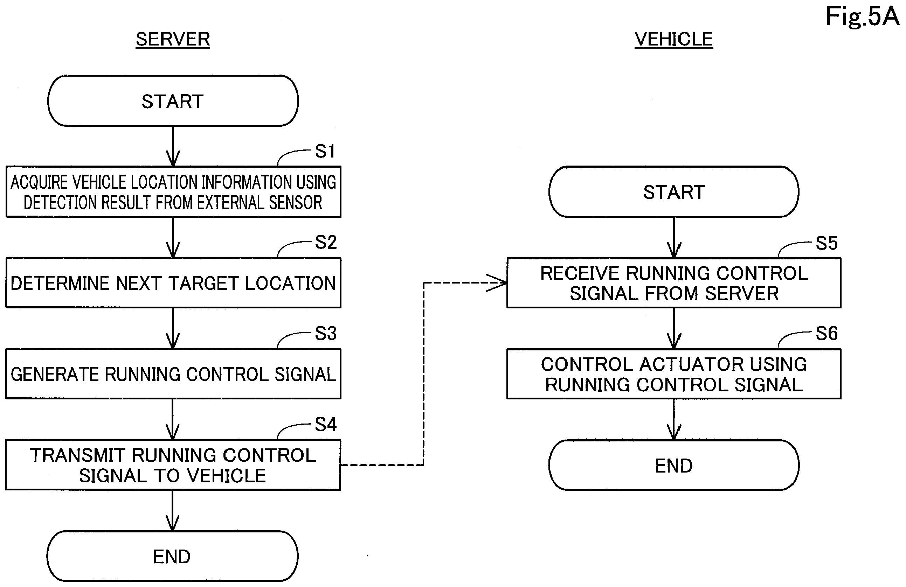

FIG. 5A is a flowchart showing a processing procedure for running control of the vehicle 100 in the first embodiment. In step S1, the server 300 acquires vehicle location information using detection result output from an external sensor. The external sensor is located outside the vehicle 100. The vehicle location information is locational information as a basis for generating a running control signal. In the present embodiment, the vehicle location information includes the location and orientation of the vehicle 100 in a reference coordinate system of the factory FC. In the present embodiment, the reference coordinate system of the factory FC is a global coordinate system and a location in the factory FC can be expressed by X, Y, and Z coordinates in the global coordinate system. In the present embodiment, the external sensor is a camera 80 that is disposed in the factory FC and outputs a captured image as detection result. In step S1, the server 300 acquires the vehicle location information using the captured image acquired from the camera 80 as the external sensor.

More specifically, in step S1, the server 300 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The outer shape of the vehicle 100 in the captured image may be detected by inputting the captured image to a detection model using artificial intelligence, for example. The detection model is prepared in the system 500 or outside the system 500. The detection model is stored in advance in a memory of the server 300, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The server 300 can acquire the orientation of the vehicle 100 through estimation based on the direction of a motion vector of the vehicle 100 detected from change in location of a feature point of the vehicle 100 between frames of the captured images using optical flow process, for example.

In step S2, the server 300 determines a target location to which the vehicle 100 is to move next. In the present embodiment, the target location is expressed by X, Y, and Z coordinates in the global coordinate system. The memory of the server 300 contains a reference route stored in advance as a route along which the vehicle 100 is to run. The route is expressed by a node indicating a departure place, a node indicating a way point, a node indicating a destination, and a link connecting nodes to each other. The server 300 determines the target location to which the vehicle 100 is to move next using the vehicle location information and the reference route. The server 300 determines the target location on the reference route ahead of a current location of the vehicle 100.

In step S3, the server 300 generates a running control signal for causing the vehicle 100 to run toward the determined target location. In the present embodiment, the running control signal includes an acceleration and a steering angle of the vehicle 100 as parameters. The server 300 calculates a running speed of the vehicle 100 from transition of the location of the vehicle 100 and makes comparison between the calculated running speed and a target speed of the vehicle 100 determined in advance. If the running speed is lower than the target speed, the server 300 generally determines an acceleration in such a manner as to accelerate the vehicle 100. If the running speed is higher than the target speed as, the server 300 generally determines an acceleration in such a manner as to decelerate the vehicle 100. If the vehicle 100 is on the reference route, server 300 determines a steering angle and an acceleration in such a manner as to prevent the vehicle 100 from deviating from the reference route. If the vehicle 100 is not on the reference route, in other words, if the vehicle 100 deviates from the reference route, the server 300 determines a steering angle and an acceleration in such a manner as to return the vehicle 100 to the reference route. In other embodiments, the running control signal may include the speed of the vehicle 100 as a parameter instead of or in addition to the acceleration of the vehicle 100.

In step S4, the server 300 transmits the generated running control signal to the vehicle 100. The server 300 repeats the acquisition of vehicle location information, the determination of a target location, the generation of a running control signal, the transmission of the running control signal, and others in a predetermined cycle.

In step S5, the vehicle 100 receives the running control signal transmitted from the server 300. In step S6, the vehicle 100 controls an actuator of the vehicle 100 using the received running control signal, thereby causing the vehicle 100 to run at the acceleration and the steering angle indicated by the running control signal. The vehicle 100 repeats the reception of a running control signal and the control over the actuator in a predetermined cycle. According to the system 500 in the present embodiment, it becomes possible to move the vehicle 100 without using a transport unit such as a crane or a conveyor.

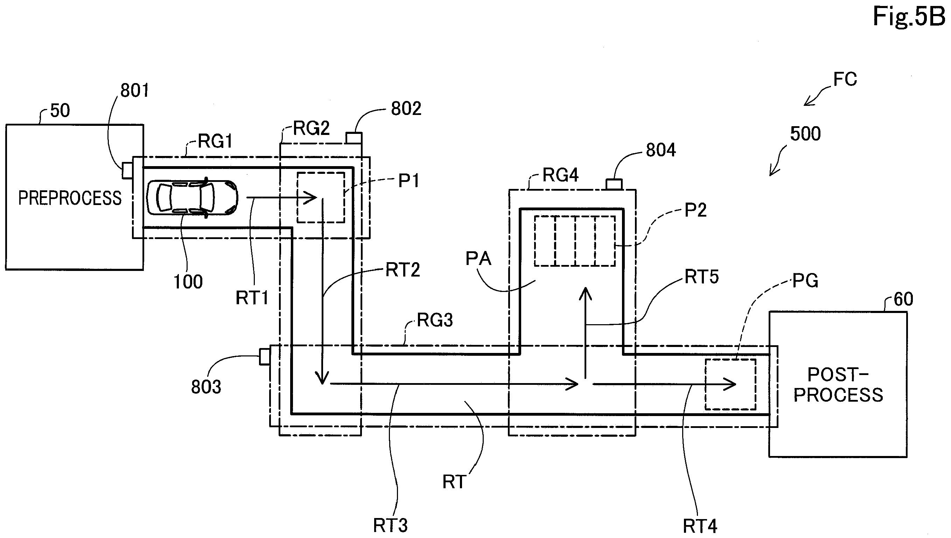

FIG. 5B is an explanatory view illustrating automatic driving control of the vehicle 100 by remote control of the remote control unit 312. In an example in FIG. 5B, the track RT includes a first track RT1, a second track RT2, a third track RT3, and a fourth track RT4 that continue to each other. The first track RT1 and the second track RT2 are connected to each other via a right-angled curve. A parking area PA is connected between the third track RT3 and the fourth track RT4. The remote control unit 312 causes the vehicle 100 to run to a loading position PG leading to the post-process 60 along the track RT at a normal time.

As illustrated in FIG. 5B, the cameras 80 that are the vehicle detectors acquire images looking down on the vehicle 100 on the track RT and the parking area PA from above. Taking the angles of view of the cameras 80 and the like into account, the number of the cameras 80 is set to such a number that entirety of the track RT and the parking area PA can be imaged. In the example in FIG. 5B, the cameras 80 include a camera 801 that can image a range RG1 including the entire first track RT1, a camera 802 that can image a range RG2 including the entire second track RT2, a camera 803 that can image a range RG3 including the entire third track RT3 and fourth track RT4, and a camera 804 that can image a range RG4 including the entire parking area PA. Note that the cameras 80 may acquire not only images showing the vehicle 100 from above, but also images showing the vehicle 100 from the front, the back, the sides, and the like. Furthermore, the cameras that acquire these images may be arbitrarily combined.

A target route through which the vehicle 100 needs to run is set in advance to the track RT. In the present embodiment, the target route corresponds to the above reference route. The remote control unit 312 causes the ECU 180 to execute driving control of the vehicle 100 while analyzing the images of the track RT and the vehicle 100 acquired by the cameras 80 at predetermined time intervals. The remote control unit 312 sequentially adjusts the relative position of the vehicle 100 with respect to the target route, so that the vehicle 100 can run along the target route. Note that, for remote control, an image of the entire vehicle 100 may be used, or an image of part of the vehicle 100 such as an alignment mark provided to the vehicle 100 may be used.

At a connection position of each track such as a position P1 illustrated in FIG. 5B, the angles of view of the cameras 80 associated with the respective connected tracks are configured to overlap each other. In the example of the position P1, the angle of view of the camera 801 associated with the first track RT1 and the angle of view of the camera 802 associated with the second track RT2 overlap each other. The vehicle 100 fed from the preprocess 50 runs to the position P1 by remote control that uses captured images of the camera 801. When the vehicle 100 arrives at the position P1, remote control is switched to remote control that uses captured images acquired by the camera 802 instead of the camera 801, and the vehicle 100 runs on the second track RT2. Similarly, captured images acquired by the camera 803 are used for running on the third track RT3 and the fourth track RT4, and captured images acquired by the camera 804 are used for running in the parking area PA. As described above, the remote control unit 312 remotely controls the vehicle 100 while appropriately switching the captured images to analyze per range of the track RT. By performing remote control, the remote control unit 312 can cause the vehicle 100 to run from the track RT to the parking area PA, evacuate from the track RT, and further stop at a parking position P2 in the parking area PA.

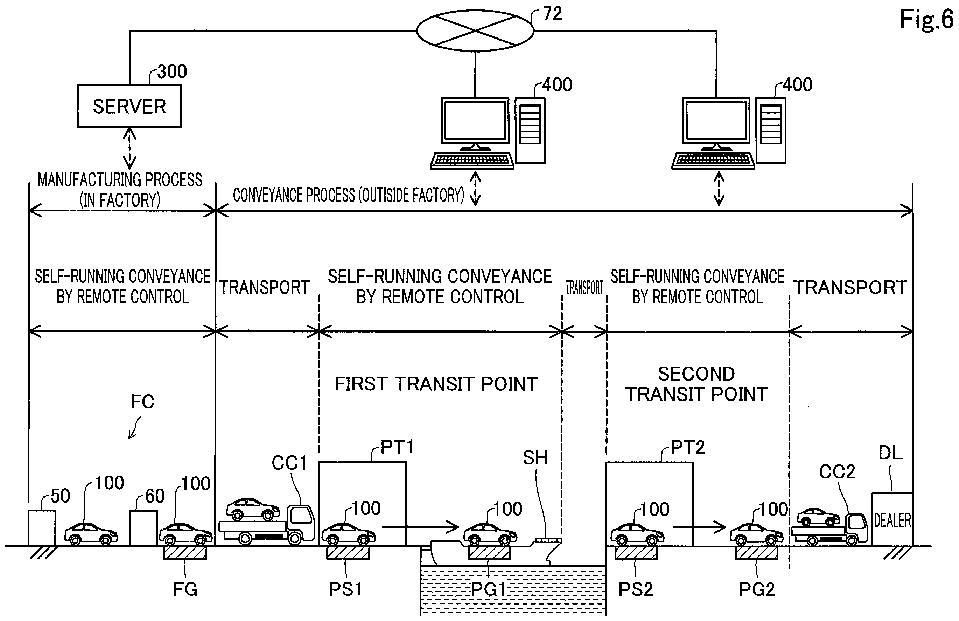

FIG. 6 is an explanatory view schematically illustrating an outline of the manufacturing process and the conveyance process of the vehicle 100. As illustrated in FIG. 6, the phrase "in the factory FC" includes the manufacturing process of the vehicle 100 including the preprocess 50 and the post-process 60 illustrated at the left end in FIG. 6 to a standby place FG at which the finished vehicle 100 stands by to be loaded by a vehicle carrier CC1. The phrase "outside the factory FC" includes loading of the vehicle 100 to the vehicle carrier CC1 to arrival at a dealer DL at the right end in FIG. 5B. Hereinafter, shipping to America illustrated in FIGS. 3 and 4 will be used as an example and described unless specified in particular.

FIG. 6 schematically illustrates a process in which the vehicle is manufactured at the factory FC in Japan, and then is shipped to the dealer DL in America that is the destination country via the first transit point and the second transit point. The transit point control device 400 is provided at each of the first transit point and the second transit point. When the vehicle 100 that has been finished in the manufacturing process is loaded to the vehicle carrier CC1 at the standby place FG, the process transitions to the conveyance process. The loaded vehicle 100 is transported by the vehicle carrier CC1 to the first port PT1 that is an example of the first transit point. At the first port PT1, the vehicle 100 is conveyed from a predetermined start position PS1 by remote control, runs to a standby position PG1 of a transport ship SH, and is loaded to the ship. The vehicle 100 loaded to the ship is transported by the transport ship SH to the second port PT2 that is an example of the second transit point. The vehicle 100 having arrived at the second port PT2 runs from a predetermined start position PS2 to a standby position PG2 by remote control. The vehicle 100 is loaded to a vehicle carrier CC2, and is transported to the dealer DL.

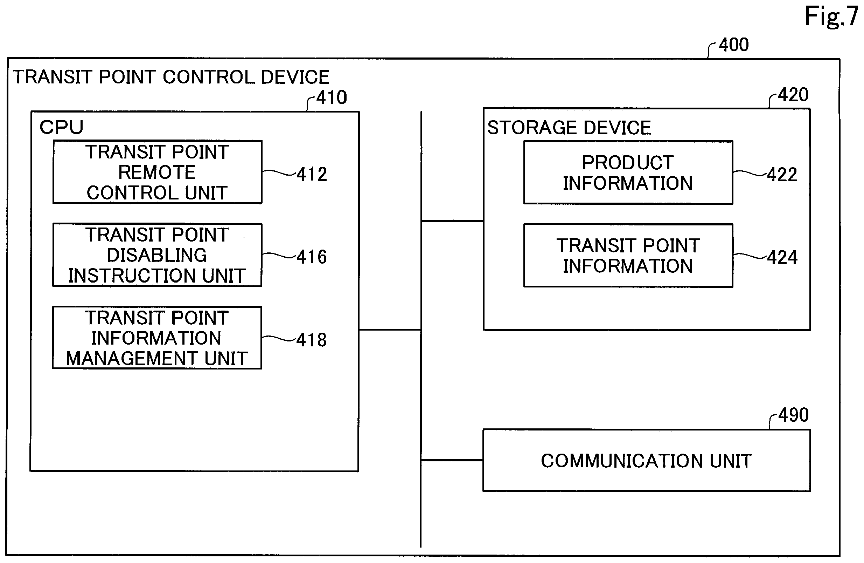

FIG. 7 is a block diagram illustrating an internal functional configuration of the transit point control device 400. The transit point control device 400 includes a CPU 410 that is a central processing unit, a storage device 420, and a communication unit 490, and these CPU 410, storage device 420, and communication unit 490 are connected with each other via an internal bus, an interface circuit, and the like. The communication unit 490 is a circuit that communicates with the vehicle 100, the server 300, the transit point control device 400 at a different transit point, and the like via the network 72.

The storage device 420 is, for example, a RAM, a ROM, a Hard Disk Drive (HDD), a Solid State Drive (SSD), and the like. When a computer program stored in the storage device 420 is executed by the CPU 410, the CPU 410 functions as a transit point remote control unit 412, the transit point disabling instruction unit 416, a transit point information management unit 418, and the like. In a readable/writable region of the storage device 420, for example, the product information 422 and transit point information 424 are stored. The product information 422 is substantially the same data as the product information 322 stored in the server 300, and is shared from the server 300.

The transit point remote control unit 412 has the same function as that of the remote control unit 312, and executes automatic running of the vehicle 100 at a transit point by remote control. The transit point remote control unit 412 transmits a control signal for requesting remote control of the vehicle 100 to the vehicle 100 via the communication unit 490.

In the example in FIG. 6, the transit point remote control unit 412 included in the transit point control device 400 at the first port PT1 can cause the vehicle 100 to automatically run at the first port PT1 by remote control. More specifically, the transit point remote control unit 412 performs conveyance from the start position PS1 of the first port PT1 to the standby position PG1 after ship loading by remote control. The transit point remote control unit 412 included in the transit point control device 400 at the second port PT2 can cause the vehicle 100 to automatically run at the second port PT2 by remote control. More specifically, the transit point remote control unit 412 performs conveyance from the start position PS2 of the second port PT2 to the standby position PG2 by remote control.

The transit point information management unit 418 manages the transit point information 424. The transit point information management unit 418 accepts, for example, automatic update from the transit point control device 400 or a user's input, and updates the transit point information 424. The transit point information management unit 418 shares the updated transit point information 424 with the server 300 or the transit point control device 400 at another transit point. Consequently, it is possible to share the latest transit point information 424 with the server 300 or the transit point control device 400 at another transit point.

The transit point disabling instruction unit 416 has the same function as that of the disabling instruction unit 316, and instructs the disabling execution unit 182 of the vehicle 100 at the transit point to execute disabling processing. The transit point disabling instruction unit 416 instructs the vehicle 100 to execute disabling processing according to a disabling instruction from the disabling instruction unit 316 of the server 300. The transit point disabling instruction unit 416 may determine a disabling timing using the product information 422 and the transit point information 424 stored in the storage device 420 instead of or together with the disabling instruction from the disabling instruction unit 316 of the server 300, and transmit a disabling request for driving control to the vehicle 100 according to the determined disabling timing.

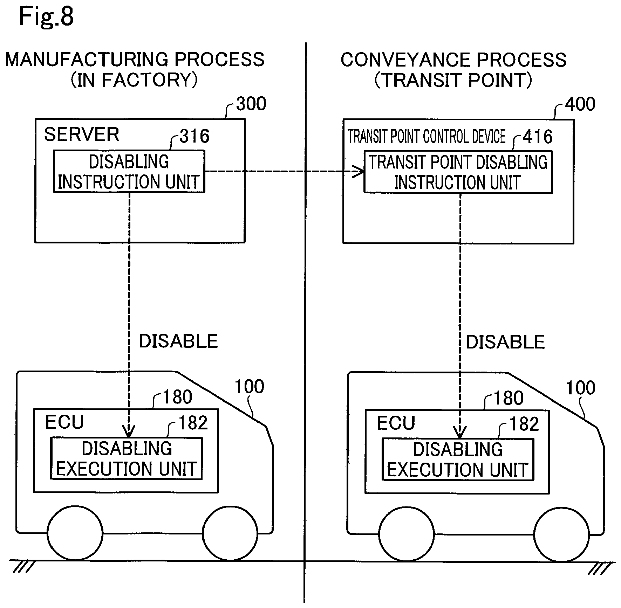

FIG. 8 is an explanatory view schematically illustrating an instructed route of disabling processing. As illustrated in FIG. 8, in a case in which disabling processing of the vehicle 100 in the factory FC is executed, the disabling instruction unit 316 of the server 300 instructs the disabling execution unit 182 of the vehicle 100 to execute the disabling processing by diagnosis communication. The disabling execution unit 182 that has received the disabling request disables a control request for remote control.

In a case in which the disabling processing of the vehicle 100 at the transit point is executed, the disabling instruction unit 316 of the server 300 instructs the transit point disabling instruction unit 416 of the transit point control device 400 to execute the disabling processing. The transit point disabling instruction unit 416 instructs the disabling execution unit 182 of the vehicle 100 to execute the disabling processing by diagnosis communication. The disabling execution unit 182 that has received the disabling request disables the control request for remote control.

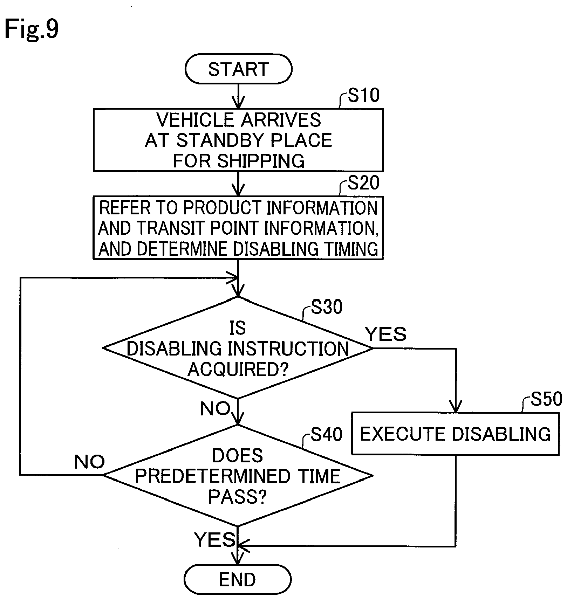

FIG. 9 is a flowchart illustrating a processing routine of disabling processing in the factory FC executed by the system 500 according to the present embodiment. This flow is started by the disabling instruction unit 316 that has accepted a notification indicating completion of processing of the post-process 60 that is an inspection process. This flow may be started when the disabling instruction unit 316 accepts the notification indicating that the vehicle 100 has arrived at the standby place FG in the factory FC.

In step S10, the vehicle 100 that has started running from the post-process 60 by remote control arrives at the standby place FG for shipping in the factory FC. Note that, in a case in which the vehicle 100 is not conveyed from the post-process 60 to the standby place FG by remote control, this flow may be started at a timing at which overall conveyance of the vehicle 100 has been completed by remote control in the factory FC.

In step S20, the disabling instruction unit 316 refers to the product information 322 and the transit point information 324, and determines a disabling timing to disable remote control of the vehicle 100. The disabling instruction unit 316 generates a control signal for instructing execution of disabling processing at the determined disabling timing. In the present embodiment, the disabling timing is a timing at which overall remote control in the manufacturing process and the conveyance process has been completed. In other words, the disabling timing is also a timing at which remote control of the vehicle 100 is not executed at all of the rest of transit points in the manufacturing process and the conveyance process. The disabling instruction unit 316 refers to the product information 322, and acquires a transit point associated with the vehicle identification information of the vehicle 100. The disabling instruction unit 316 refers to whether or not remote control can be performed, execution of remote control, and whether or not the acquired transit point includes the transit point disabling instruction unit 416 associated with the acquired transit point, and determines a timing at which remote control is completed as the disabling timing.

In a case in which remote control of the vehicle 100 is executed at at least one of transit points after shipping, the disabling instruction unit 316 determines as the disabling timing a completed timing at which remote control has been completed at a transit point at which remote control is lastly executed. Note that a predetermine timing after the completed timing may be a disabling timing. Furthermore, when the transit point control device 400 acquires the disabling timing, or the transit point control device 400 refers to the product information 422 and determines the disabling timing, the transit point disabling instruction unit 416 may execute disabling processing at the disabling timing.

As illustrated in FIGS. 3 and 4, in the example in which the vehicle 100 of the vehicle identification information ID1 is shipped to America, last remote control is executed at the second port PT2 that is the second transit point. Hence, the disabling instruction unit 316 determines as the disabling timing a point of time of completion of remote control at the second port PT2 that is a timing at which remote control is completed at all transit points that can execute remote control.

In an example in which the vehicle 100 of the vehicle identification information ID2 is shipped in Japan, remote control is not executed at the third port PT3 that is the first transit point. That is, remote control of the vehicle 100 is not executed at all transit points after shipping, and therefore the disabling instruction unit 316 determines a point of time of arrival at the standby place FG in the factory FC as the disabling timing. In this case, the disabling instruction unit 316 generates a control signal for executing disabling processing, and transmits the control signal to the disabling execution unit 182 of the vehicle 100.

In an example in which the vehicle 100 of the vehicle identification information ID3 is shipped to Europe, remote control cannot be performed at the fourth port PT4, and remote control is executed at the fifth port PT5. Hence, the disabling instruction unit 316 determines a point of time of completion of remote control at the fifth port PT5 as the disabling timing. In a case in which the vehicle 100 of the vehicle identification information ID4 is shipped to China, the sixth port PT6 does not include the transit point disabling instruction unit 416. Hence, the disabling instruction unit 316 determines the point of time of arrival at the standby place FG in the factory FC as the disabling timing.

In step S30, the disabling execution unit 182 of the vehicle 100 at the standby place FG stands by for reception of the control signal for executing the disabling processing from the disabling instruction unit 316. In a case in which the disabling instruction is received (S30: YES), the processing is moved to step S50. In step S50, the driving control unit 184 disables driving control by remote control. Note that an execution result of the disabling processing may be output to the server 300 or the transit point control device 400.

In a case in which the disabling instruction is not received (S30: NO), the disabling execution unit 182 moves the processing to step S40, and stands by for reception of a command signal of the disabling instruction until a predetermined time passes. In a case in which the disabling instruction cannot be received within the predetermined time (S40: YES), the disabling execution unit 182 finishes processing without executing the disabling processing.

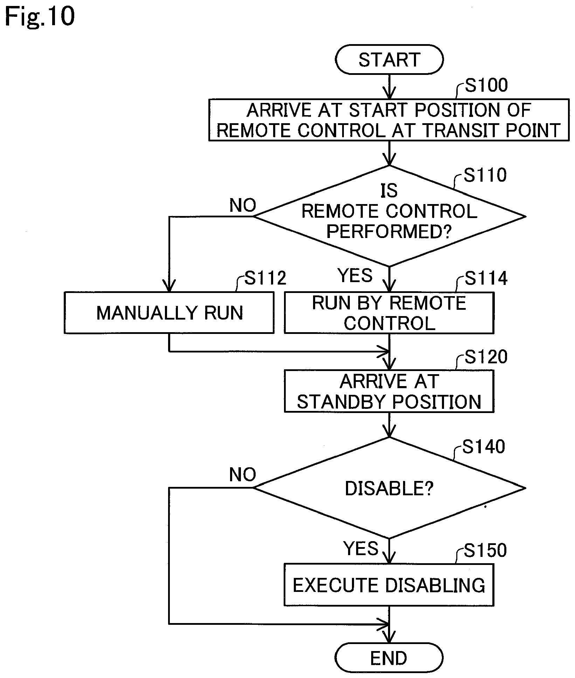

FIG. 10 is a flowchart illustrating a processing routine of disabling processing executed at a transit point by the system 500 according to the present embodiment. This flow is started by the disabling instruction unit 316 or the transit point disabling instruction unit 416 that has detected that the vehicle 100 has arrived at the transit point. For example, the disabling instruction unit 316 or the transit point disabling instruction unit 416 acquires vehicle identification information from an RF-ID tag or the like, identifies the vehicle 100 that is a processing target, and thereby detects the arrival of the vehicle 100 at the transit point.

In step S100, the vehicle 100 that is the disabling processing target arrives at the start position PS2 of the transit point. Whether or not the vehicle 100 that has arrived is the vehicle 100 that is conveyance target of remote control is determined in step S110. It is possible to determine whether or not the vehicle 100 is the remote control target by, for example, cross-checking the vehicle identification information acquired from the vehicle 100 and the product information 422. In a case in which the vehicle 100 is the remote control target (S110: YES), the vehicle 100 automatically runs to the standby position PG2 that is a destination by driving control according to remote control of the transit point remote control unit 412. In a case in which the vehicle 100 is not the remote control target (S110: NO), the vehicle 100 runs to the standby position PG2 by driving control according to, for example, manual driving of an operator or the like at the transit point.

In step S120, the vehicle 100 arrives at the standby position PG2. In step S140, the disabling instruction unit 316 checks whether or not the vehicle 100 arrives at the standby position PG2 at the determined disabling timing. In a case in which the vehicle 100 does not arrive at the disabling timing (S140: NO), processing is finished without performing disabling. In a case in which the vehicle 100 arrives at the disabling timing (S140: YES), the transit point disabling instruction unit 416 stands by for reception of the command signal for disabling remote control from the disabling instruction unit 316. When receiving the command signal for executing disabling, the transit point disabling instruction unit 416 causes the disabling execution unit 182 of the vehicle 100 to execute the disabling processing, and finishes the processing.

As described above, the system 500 according to the present embodiment includes the remote control unit 312 that causes the vehicle 100 to run by remote control, the disabling execution unit 182 that executes disabling processing of irreversibly disabling remote control of the vehicle 100, and the disabling instruction unit 316 that determines using the transit point information 324 whether or not to execute disabling processing, and instructs the disabling execution unit 182 or the transit point disabling instruction unit 416 to execute the disabling processing when determining to execute the disabling processing. It is possible to disable remote control to meet a demand of remote control in the conveyance process after shipping. Consequently, it is possible to execute remote control after shipping, and appropriately execute disabling.

According to the system 500 according to the present embodiment, the transit point information includes information related to whether or not remote control can be executed at the transit point, and, in a case in which the remote control cannot be executed at the transit point in the conveyance process, the disabling instruction unit 316 instructs the disabling execution unit 182 or the transit point disabling instruction unit 416 to execute disabling processing. Consequently, it is possible to determine the disabling timing a timing that matches feasibility of the remote control at the transit point after shipping.

According to the system 500 according to the present embodiment, the transit point information includes information related to whether or not remote control is executed at the transit point, and, in a case in which the remote control is not executed at the transit point in the conveyance process, the disabling instruction unit 316 instructs the disabling execution unit 182 or the transit point disabling instruction unit 416 to execute disabling processing. Consequently, it is possible to determine the disabling timing a timing that matches whether or not the remote control is executed at the transit point after shipping.

According to the system 500 according to the present embodiment, the transit point information 324 includes information related to whether or not the transit point includes the transit point disabling instruction unit 416, and, in a case in which the transit point in the conveyance process does not include the transit point disabling instruction unit 416, the disabling instruction unit 316 instructs the disabling execution unit 182 or the transit point disabling instruction unit 416 at another transit point to execute disabling processing. Consequently, it is possible to determine the disabling timing a timing that matches whether or not the transit point after shipping includes the transit point disabling instruction unit 416.

According to the system 500 according to the present embodiment, the disabling instruction unit 316 instructs the disabling execution unit 182 or the transit point disabling instruction unit 416 to execute disabling processing at a timing at which remote control has been completed at all transit points that can execute the remote control. Consequently, it is possible to perform disabling at the earliest timing at which overall remote control in the conveyance process has been completed, and secure safety of the remote control earlier.

According to the system 500 according to the present embodiment, the disabling instruction unit 316 determines a disabling timing to disable remote control using the transit point information 324, and instructs the transit point disabling instruction unit 416 or the disabling execution unit 182 to execute disabling processing at the determined disabling timing. Consequently, it is possible to execute the disabling processing at an appropriate timing that matches a demand of remote control in the conveyance process after shipping. Consequently, it is possible to secure safety of remote control earlier by performing disabling while executing the remote control after shipping.

The system 500 according to the present embodiment further includes the transit point information management unit 418 that updates the transit point information 424. By updating information related to remote control at the transit point, it is possible to determine a disabling timing on the basis of the latest situation of the transit point.

### B. Second Embodiment

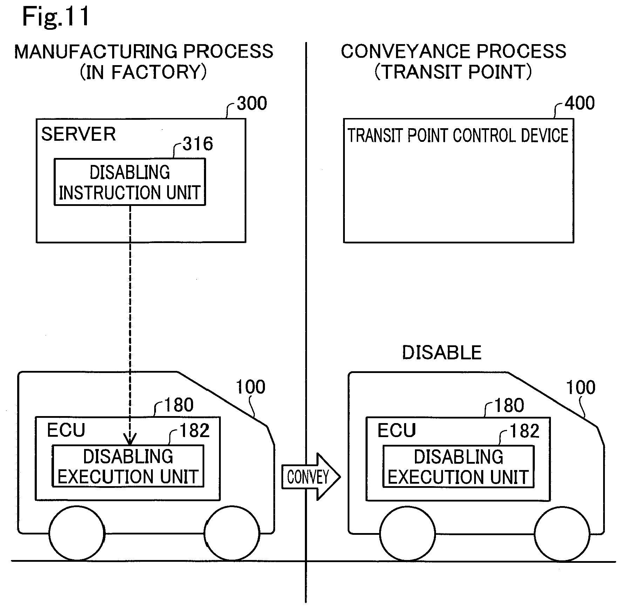

FIG. 11 is an explanatory view schematically illustrating a configuration of the system 500 according to the second embodiment. The configuration of the system 500 in the present embodiment is the same as that of the first embodiment. The above first embodiment has described the example where, in a case in which disabling processing of the vehicle 100 is executed at the transit point, the disabling instruction unit 316 of the server 300 transmits an instruction for causing the transit point disabling instruction unit 416 of the transit point control device 400 to instruct the vehicle 100 to execute the disabling processing. By contrast with this, in the present embodiment, as illustrated in FIG. 11, when determining a disabling timing using the transit point information 324, the disabling instruction unit 316 instructs the disabling execution unit 182 of the vehicle 100 to execute disabling processing at the disabling timing. In a case in which the disabling timing is determined as a timing at which remote control is finished at a transit point, the vehicle 100 executes disabling processing at a point of time at which the timing has come.

According to the system 500 according to the present embodiment, the disabling instruction unit 316 instructs the disabling execution unit 182 of the vehicle 100 to execute disabling processing at the determined disabling timing. It is possible to cause the vehicle 100 to complete the disabling processing at the time at which the disabling timing has come without the server 300 or the transit point control device 400. Consequently, it is possible to execute the disabling processing without communicating with an external device such as the transit point control device 400 at the disabling timing.

### C. Third Embodiment

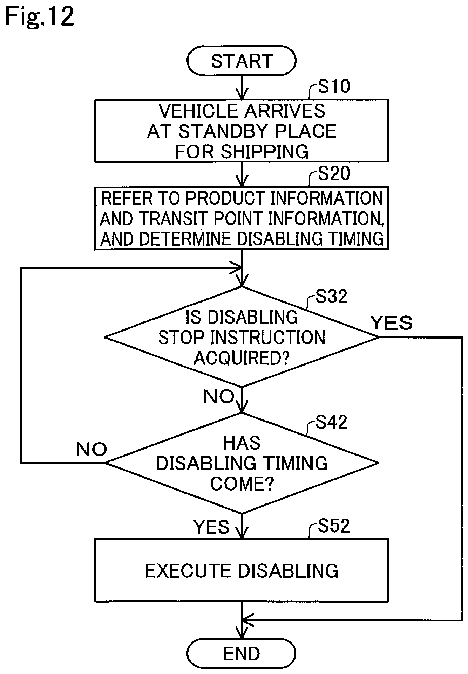

FIG. 12 is a flowchart illustrating a processing routine of disabling processing in the factory FC executed by the system 500 according to the third embodiment. This flow differs from the flow according to the first embodiment illustrated in FIG. 9 in that this flow includes step S32, S42, and S52 instead of steps S30, S40, and S50. The above first embodiment has described the example where, when the disabling timing determined by the disabling instruction unit 316 comes, the disabling instruction unit 316 generates the control signal for instructing execution of the disabling processing. By contrast with this, the present embodiment differs from the above first embodiment in that, when the disabling timing comes, the disabling execution unit 182 executes disabling processing. Furthermore, the disabling instruction unit 316 generates a control signal indicating a disabling stop instruction for stopping execution of disabling processing of the disabling execution unit 182.

The disabling timing determined in step S20 is transmitted to the disabling execution unit 182 of the vehicle 100. In step S32, the disabling execution unit 182 stands by for reception of the disabling stop instruction from the disabling instruction unit 316. In a case in which the disabling stop instruction is received (S32: YES), processing is finished without executing the disabling processing. In a case in which the disabling stop instruction is not received (S32: NO), the processing is moved to step S42 to check whether or not the disabling timing has come. In a case in which the disabling timing has not come (S42: NO), the processing is returned to step S32. In a case in which the disabling timing has come (S42: YES), the disabling execution unit 182 executes the disabling processing, and the ECU 180 disables driving control according to remote control. Even in a case of this configuration, it is possible to obtain the same effect as that of the first embodiment.

### D. Fourth Embodiment

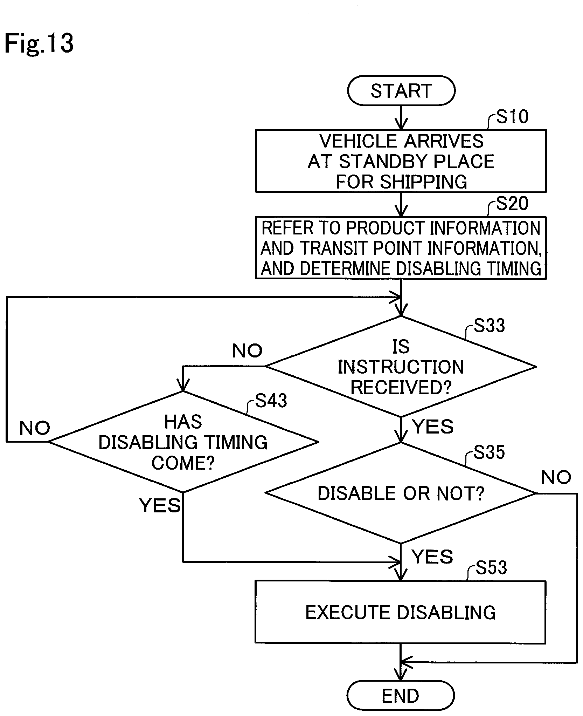

FIG. 13 is a flowchart illustrating a processing routine of disabling processing in the factory FC executed by the system 500 according to the fourth embodiment. This flow differs from the flow according to the first embodiment with reference to FIG. 9 in that this flow includes steps S33, S35, S43, and S53 instead of steps S30, S40, and S50. The above first embodiment has described the example where, when the disabling timing determined by the disabling instruction unit 316 comes, the disabling instruction unit 316 generates the control signal for instructing execution of the disabling processing. By contrast with this, according to the present embodiment, when the disabling timing comes, the disabling instruction unit 316 generates a control signal for instructing whether to execute disabling processing or not to execute the disabling processing.

In step S33, the disabling execution unit 182 stands by for reception of the control signal from the disabling instruction unit 316. In a case in which the control signal is received (S33: YES), the disabling execution unit 182 moves the processing to step S35. In step S35, the disabling execution unit 182 checks whether the received control signal instructs to execute the disabling processing or instructs not to execute the disabling processing. In a case in which the received control signal instructs to execute the disabling processing (S35: YES), the disabling execution unit 182 moves the processing to step S53 to disable remote control. In a case in which the received control signal instructs not to execute the disabling processing (S35: NO), the disabling execution unit 182 finishes the processing without disabling remote control.

In step S33, in a case in which the control signal is not received (S33: NO), the disabling execution unit 182 moves the processing to step S43. In step S43, the disabling execution unit 182 checks whether or not the disabling timing has come. In a case in which the disabling timing has not come (S43: NO), the disabling execution unit 182 returns the processing to step S33. In a case in which the disabling timing has come (S43: YES), the disabling execution unit 182 moves the processing to step S53 to disable the remote control. Even in a case of this configuration, it is possible to obtain the same effect as that of the first embodiment.

### E. Other Embodiment:

(E1) Each of the above embodiments has described the example where remote control is irreversibly disabled. However, the remote control may be reversibly disabled. In a case of reversible disabling, it is possible to enhance security by executing reversible disabling every time conveyance of the vehicle 100 is executed by remote control. In this case, from a viewpoint of security enhancement, it is preferable to execute irreversible disabling at a timing at which last remote control is executed.

(E2) The above first embodiment has described the example where the transit point information 324 includes whether or not remote control can be performed, execution of the remote control, and whether or not the transit point includes the transit point disabling instruction unit. By contrast with this, the transit point information 324 is not limited to these pieces of information, and may include various pieces of information related to remote control such as "state of transit point" and "operation time zone of disabling execution unit", for example. "State of transit point" includes information indicating whether or not a transit point is under maintenance or the like as illustrated in, for example, FIG. 4.

(E3) Each of the above embodiments has described the example where the disabling instruction unit 316 determines the disabling timing using the transit point information 324. By contrast with this, a disabling timing may not be determined. For example, the transit point information 324 and 424 may be checked every time the vehicle 100 moves to a transit point to execute disabling processing according to a check result.

(E4) The above first embodiment has described the example where the transit point control device 400 includes the transit point information management unit 418. By contrast with this, in a case in which, for example, the transit point information 324 and 424 are not updated, the transit point control device 400 may not include the transit point information management unit 418.

(E5) Each of the above embodiments has described the example where the disabling instruction unit 316 and the transit point information acquisition unit 318 are included in the server 300. By contrast with this, all or part of the functions of the disabling instruction unit 316, the transit point information acquisition unit 318, and the like may be included in devices such as the vehicle 100 and the transit point control device 400 other than the server 300. Furthermore, the disabling execution unit 182 may be included not only in the vehicle 100, but also in the server 300 and the transit point control device 400.

(E6) Each of the above embodiments has described the example where the transit point control device 400 includes the transit point disabling instruction unit 416. By contrast with this, the transit point control device 400 may not include the transit point disabling instruction unit 416. In this case, the disabling instruction unit 316 may directly instruct the disabling execution unit 182 of the vehicle 100 at the transit point to execute disabling processing.

(E7) In each of the above-described embodiments, the external sensor is not limited to the camera but may be the distance measuring device, for example. The distance measuring device is a light detection and ranging (LiDAR) device, for example. In this case, detection result output from the external sensor may be three-dimensional point cloud data representing the vehicle 100. The server 300 and the vehicle 100 may acquire the vehicle location information through template matching using the three-dimensional point cloud data as the detection result and reference point cloud data, for example.

(E8) In each of the above-described embodiments, the server 300 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 300 may acquire vehicle location information, determine a target location to which the vehicle 100 is to move next, and generate a route from a current location of the vehicle 100 indicated by the acquired vehicle location information to the target location. The server 300 may generate a route to the target location between the current location and a destination or generate a route to the destination. The server 300 may transmit the generated route to the vehicle 100. The vehicle 100 may generate a running control signal in such a manner as to cause the vehicle 100 to run along the route received from the server 300 and control an actuator using the generated running control signal.
(2) The server 300 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control an actuator using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 300 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(E9) In the above-described first embodiment, the server 300 automatically generates a running control signal to be transmitted to the vehicle 100. By contrast, the server 300 may generate a running control signal to be transmitted to the vehicle 100 in response to operation by an external operator existing outside the vehicle 100. For example, the external operator may operate an operating device including a display on which a captured image output from the external sensor is displayed, steering, an accelerator pedal, and a brake pedal for operating the vehicle 100 remotely, and a communication device for making communication with the server 300 through wire communication or wireless communication, for example, and the server 300 may generate a running control signal responsive to the operation on the operating device.

(E10) In each of the above-described embodiments, the vehicle 100 is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 100. In order for the vehicle 100 to acquire information from outside for unmanned driving, the vehicle 100 is simply required to include the communication device further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory FC, or a remaining component such as a bodyshell may be mounted on the vehicle 100 after the vehicle 100 is shipped from a factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(E11) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(E12) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

The control and its method described in the present disclosure may be implemented by a dedicated computer provided by configuring a processor and memory that are programmed to execute one or more functions embodied by computer programs. Alternatively, the control unit and its method described in the present disclosure may be implemented by a dedicated computer provided by configuring a processor with one or more dedicated hardware logic circuits. Alternatively, the control unit and its method described in the present disclosure may be implemented by one or more dedicated computers configured by a combination of a processor and memory programmed to execute one or more functions and another processor with one or more hardware logic circuits. The computer program may also be stored in a computer-readable non-transitory recording medium as an instruction to be executed by a computer.

The present disclosure is not limited to the above-described embodiments, and can be implemented by various configurations without departing from the gist of the present disclosure. For example, technical features in the embodiments corresponding to technical features in each aspect described in the summary can be replaced or combined as appropriate to solve part or all of the above-described problems or achieve part or all of the above-described effects. Furthermore, the technical features that are not described as indispensable in this description can be deleted as appropriate.

## Claims

1. A system (500) comprising:
a remote control unit (312) configured to cause a moving object to move by remote control, the moving object being able to move by the remote control in a manufacturing process in a factory (FC) for manufacturing the moving object, and in a conveyance process outside the factory (FC), the conveyance process shipping the moving object after manufacturing from the factory (FC) and conveying the moving object to a destination, the moving object including a communication unit (190) and a driving control unit (184), the communication unit (190) having a communication function, the driving control unit (184) executing driving control of the moving object;
a disabling execution unit (182) configured to execute disabling processing for disabling the remote control; and
a disabling instruction unit (316) configured to determine whether or not to execute the disabling processing using transit point information (324) related to the remote control at at least one transit point at which the moving object transits in the conveyance process, the disabling instruction unit (316) being configured to instruct the disabling execution unit (182) to execute the disabling processing when determining that the disabling processing is to be executed.

2. The system (500) according to claim 1, wherein the disabling instruction unit (316) is configured not to instruct the disabling execution unit (182) to execute the disabling processing at a time of shipping of the moving object when the disabling execution unit (182) determines that the disabling processing is not to be executed.

3. The system (500) according to claim 1, wherein the transit point information (324) includes information on a place that the moving object transits through until the moving object arrives at the destination after the moving object is manufactured.

4. The system (500) according to claim 1, wherein the moving object is conveyed to the transit point by a device other than the moving object in the conveyance process.

5. The system (500) according to claim 1, wherein
the transit point information (324) includes information related to whether or not the remote control is able to be executed at the transit point, and
the disabling instruction unit (316) is configured to instruct the disabling execution unit (182) to execute the disabling processing in a case in which the remote control is unable to be executed at the transit point.

6. The system (500) according to claim 3, wherein the disabling instruction unit (316) is configured to instruct the disabling execution unit (182) to execute the disabling processing such that the disabling processing is executed at a timing at which the remote control has been completed at all transit points at which the remote control is able to be executed.

7. The system (500) according to claim 1, wherein
the transit point information (324) includes information related to whether or not the remote control is executed at the transit point, and
the disabling instruction unit (316) is configured to instruct the disabling execution unit (182) to execute the disabling processing in a case in which the remote control is not executed at the transit point.

8. The system (500) according to claim 7, wherein the disabling instruction unit (316) is configured to instruct the disabling execution unit (182) to execute the disabling processing such that the disabling processing is executed at a timing at which the remote control has been completed at all transit points at which the remote control is executed.

9. The system (500) according to claim 1, wherein
the transit point information (324) includes information related to whether or not the transit point includes a transit point disabling instruction unit (316) that instructs the disabling execution unit (182) to execute the disabling processing at the transit point, and
the disabling instruction unit (316) is configured to instruct the disabling execution unit (182) to execute the disabling processing in a case in which the transit point does not include the transit point disabling instruction unit (316).

10. The system (500) according to claim 1, wherein the disabling instruction unit (316) is configured to determine using the transit point information (324) a disabling timing at which the remote control is disabled, and instruct the disabling execution unit (182) to execute the disabling processing at the determined disabling timing.

11. The system (500) according to claim 1, wherein
the disabling execution unit (182) is included in the moving object, and
the disabling instruction unit (316) is configured to determine using the transit point information (324) a disabling timing at which the remote control is disabled, and instruct the disabling execution unit (182) included in the moving object to execute the disabling processing at the determined disabling timing.

12. The system (500) according to claim 10 or 11, wherein the disabling timing is a timing at which the remote control has been completed at the at least one transit point.

13. The system (500) according to claim 1, further comprising a transit point information management unit (418) that updates the transit point information (324).

14. A system (500) comprising:
a remote control unit (312) configured to cause a moving object to move by remote control, the moving object being able to move by the remote control in a manufacturing process in a factory (FC) for manufacturing the moving object, and in a conveyance process outside the factory (FC), the conveyance process shipping the moving object after manufacturing from the factory (FC) and conveying the moving object to a destination, the moving object including a communication unit (190) and a driving control unit (184), the communication unit (190) having a communication function, the driving control unit (184) being configured to execute driving control of the moving object;
a disabling execution unit (182) configured to execute disabling processing for disabling the remote control; and
a disabling instruction unit (316) configured to determine whether or not to execute the disabling processing using transit point information (324) related to the remote control at at least one transit point at which the moving object transits in the conveyance process, the disabling instruction unit (316) being configured to instruct the disabling execution unit (182) to execute the disabling processing when determining that the disabling processing is to be executed, wherein
the transit point information (324) includes information related to whether or not the remote control is able to be executed at the transit point, and
the disabling instruction unit (316) is configured to instruct the disabling execution unit (182) to execute the disabling processing such that the disabling processing is executed at a timing at which the remote control has been completed at all transit points at which the remote control is able to be executed.

15. A server (300) comprising:
a remote control unit (312) configured to cause a moving object to move by remote control, the moving object being able to move by the remote control in a manufacturing process in a factory (FC) for manufacturing the moving object, and in a conveyance process outside the factory (FC), the conveyance process shipping the moving object after manufacturing from the factory (FC) and conveying the moving object to a destination, the moving object including a communication unit (190), a driving control unit (184), and a disabling execution unit (182), the communication unit (190) having a communication function, the driving control unit (184) being configured to execute driving control of the moving object, the disabling execution unit (182) being configured to execute disabling processing for disabling the remote control; and
a disabling instruction unit (316) configured to determine whether or not to execute the disabling processing using transit point information (324) related to the remote control at at least one transit point at which the moving object transits in the conveyance process, the disabling instruction unit (316) being configured to instruct the disabling execution unit (182) to execute the disabling processing when the disabling instruction unit (316) determining that the disabling processing is to be executed.
